# EUROPEAN PATENT SPECIFICATION

(11) **EP 2 746 607 B1**
(45) Date of publication and mention of the grant of the patent: **26.07.2017**
(21) Application number: 12199242.4
(22) Date of filing: 21.12.2012
(51) Int. Cl.: F16C 32/04

(54) **Jacketed magnetic bearing and rotary machine comprising such a bearing**
Magnetlager und Drehmaschine mit einem derartigen Lager
Palier magnétique à enveloppe et machine rotative comprenant un tel palier

(43) Date of publication of application: 25.06.2014
(73) Proprietor: Nuovo Pignone S.r.l., 50100 Florence (IT)
(72) Inventor: Bigi, Manuele, 50100 FLORENCE (IT); Romanelli, Marco, 50100 FLORENCE (IT); Anselmi, Marco, 50100 FLORENCE (IT); Fioraventi, Duccio, 50100 FLORENCE (IT); Mei, Luciano, 50100 FLORENCE (IT)
(74) Representative: Dossmann, Gérard

(56) References cited:
- EP-A1- 2 014 792
- EP-A1- 2 182 230
- EP-A2- 1 967 286
- FR-A1- 2 632 354

## Description

The embodiments disclosed relate generally to magnetic bearings for rotary machines having a rotor. In particular, the embodiments relate to magnetic bearings for rotary machines in which the rotor and the bearing are, in use, in contact with a fluid, for instance a gaseous atmosphere, that is corrosive, acid, or carrying particles. Some exemplary embodiments specifically relate to a rotary machine comprising such a magnetic bearing. A jacketed magnetic bearing according to the preamble of claim 1 is known from EP 1 967 286 A. Use of magnetic bearings to rotary machines is becoming more and more widespread, in particular in case of corrosive fluid. When the operating fluid of the machine in which the bearing operates is either acid, or corrosive or carrying particles, it is essential to protect the coils of the magnetic bearing and the associated means, by using anti-corrosion protection technologies. An example of such a technology is the jacketed bearing in which the stator portion of the bearing is protected by a metal jacket made of a material that does not oxidize or corrode and in general does not suffer any phenomena related to the aggressiveness of the environment.

A jacket may be in the form of a plate welded to an annular support in which is placed a stator magnetic circuit comprising at least one coil and a ferromagnetic body. The annular support may be made of a stainless material, such as magnetic stainless steel. The jacket of closure plate may be made out of the same material as the annular support, or it may be of a different metallic material, such as nickel base alloy for example.

In order to withstand operating conditions (pressure, fast variations in pressure, temperature, ability to withstand corrosion and abrasion), the jacket generally presents thickness lying in the range of 0.3 to 1mm or more, for instance in the range of 0.3 to 0.5mm, i.e. similar to that of the airgap of the magnetic bearing (which is the distance between the stator magnetic circuit and a rotor armature of the bearing). The presence of such a jacket of non-magnetic material thus amounts to increasing the thickness of the airgap of the bearing, which leads to a significant limit on the load available from said bearing. Moreover, it does not totally ensure the lack of contacts between the jacket and the rotor armature of the magnetic bearing, in any conditions.

It is therefore desirable for the thickness of the jacket to be reduced and for the jacket to be constituted by a fine metal sheet. Nevertheless, it requires the use of specific materials having high mechanical properties and anti-corrosion properties, in order to ensure the protection of the stator magnetic circuit against corrosion and to keep the same shape and dimensions in operation.

An object of the present invention is to remedy the above drawbacks while keeping the benefit of the principle of jacketing bearings. In particular, one aim of the invention is to provide a magnetic bearing which is cheaper to build and having a higher loading capacity.

According to a first aspect, there is provided a jacketed magnetic bearing according to claim 1. Thanks to the protective layer, the material of the jacket may be chosen for its magnetic and mechanical properties: the properties against corrosion are no more relevant. The material of the jacket and the material of the annular support are protected by the protective layer, against corrosion. In particular, the protective layer avoids wet CO₂ corrosion damages on carbon and low alloy steels, and avoids chlorides pitting corrosion damages on stainless steel. It is then possible to choose these materials (having the wanted magnetic and mechanical properties) for the jacket and/or the annular support. Moreover, when the material of the jacket is a ferromagnetic material, it is no more necessary to have a thin jacket to protect the stator magnetic circuit: the jacket may have a larger thickness than a non-magnetic jacket, which reduces the requirements of the material regarding the mechanical properties and the deformation of the jacket in use, leading to a longer lifetime of the bearing and to a smaller airgap.

Therefore, thanks to the use of a protective layer and of a magnetic jacket, it is possible to reduce the airgap, and thus the capabilities of the magnetic bearing of the invention are increased. Moreover, the protective layer can be easily refurbished, during a maintenance step, which allows to improve and to ease the serviceability of the bearing. Furthermore, thanks to the protective layer, it is possible to use for the jacket and/or for the annular support, materials such as carbon and low alloy steels or stainless steel, which are cheap and easy to weld.

In some embodiments, the protective layer may comprise a layer of nickel.

Said layer of nickel may be formed by electroless-nickel plating.

Said layer of nickel may comprise nickel and phosphorus.

In some embodiments, the annular jacket may comprise magnetic material chosen in the group of ferromagnetic material, magnetic stainless steel and nickel base alloy. The annular support and the jacket comprise the same material chosen among carbon and low alloy steels and stainless steel. The choice of the same material for both the annular support and the jacket allows to ease the welding step since the materials have the same chemical composition.

According to an embodiment, the bearing is a jacketed axial magnetic bearing. The bearing may comprise a rotor armature in the form of a disk secured to the rotor, and the stator magnetic circuit may be facing said rotor armature.

The rotor and the rotor armature may be, in use, in contact with a fluid, for instance a gaseous atmosphere, that is corrosive, acid, or carrying particles.

In some embodiments, the annular jacket is in contact with the coil and/or the ferromagnetic body.

In some embodiments, the protective enclosure comprises magnetic material and is coated by the protective layer.

According to an embodiment, the annular jacket has a U section with a radial web and two axial flanges. In some embodiments, the material of the radial web and the material of the axial flanges are different. The material of the radial web may be chosen among ferromagnetic materials. The material of axial flanges may be chosen among anti-corrosion materials which may be welded to the annular support.

According to a further aspect, a rotary machine, for example a turbomachinery, may comprise a rotor and a jacketed bearing as previously described.

According to a further aspect, a process to manufacture a bearing according to claim 12 is provided. In some embodiments, the process may comprise the following steps of: coating the annular jacket with the protective layer, performing a heat treatment of the coated annular jacket and then welding the coated annular jacket to the annular support.

Other characteristics used appear on reading the following description of particular embodiments of the invention given as examples and with reference to the accompanying drawings, in which:
Fig.1 is an axial section view on line I-I of Fig.2, showing a magnetic bearing according to an exemplary embodiment;
Fig.2 is a radial section view on line II-II of Fig.1;
Fig.3 is an axial section view of a magnetic bearing according to an exemplary embodiment.

The following detailed description of the exemplary embodiments refers to the accompanying drawings. The same reference numbers in different drawings identify the same or similar elements. Additionally, the drawings are not necessarily drawn to scale.

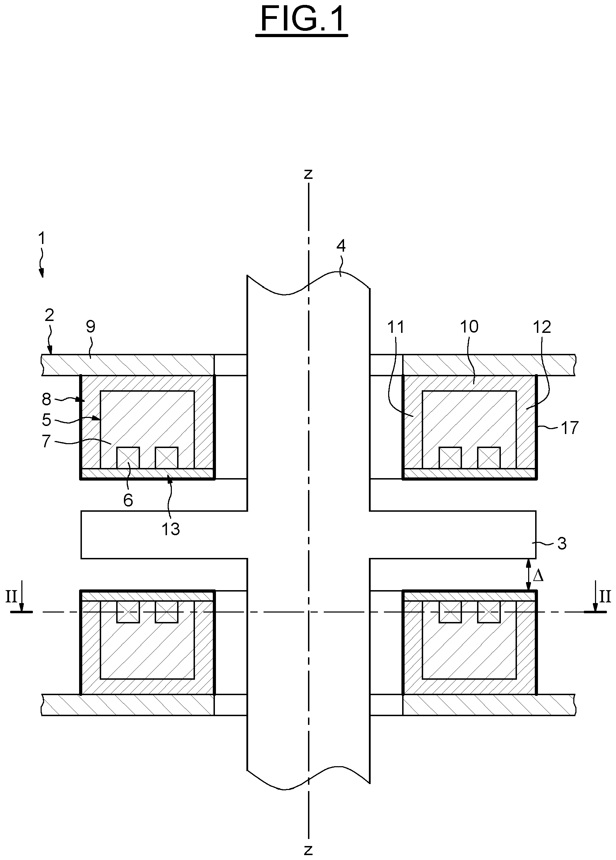

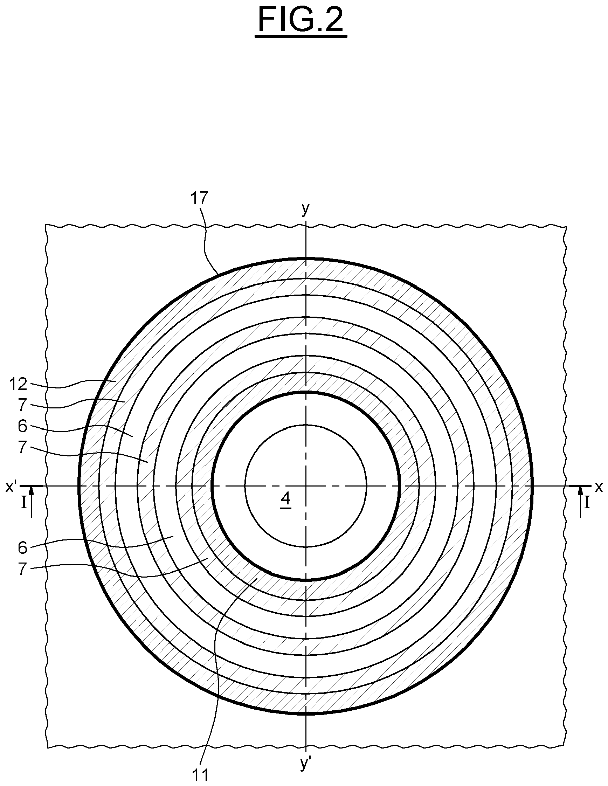

Figures 1 and 2 show a first embodiment of an axial jacketed magnetic bearing 1 of the present invention, for a rotary machine. The jacketed magnetic bearing 1 comprises a stator armature 2 and a rotor armature 3 in the form of a disk secured to a rotary shaft 4 of the rotary machine.

The stator armature 2 comprises a stator magnetic circuit 5 including, in conventional manner, one or more annular coils 6 and a ferromagnetic body 7. The ferromagnetic body 7 may be massive or it may be laminated locally. The stator magnetic circuit 5 is placed in a metallic annular support 8 that is itself secured to a stationary support device 9.

The stator magnetic circuit 5 is placed facing the rotor armature 3. The stator armature 2 defines an airgap Δ relative to the rotor armature 3. In some embodiments, the airgap Δ may lie in the range of 0.4mm to 1.5mm, preferably in the range of 0.4mm to 1.2mm.

The annular support 8 of the stator magnetic circuit 5 has a U section with a radial web 10 and inner and outer axial flanges 11 and 12. The length of the flanges 11 and 12 in the direction of the axis of the rotary shaft 4 is at least equal to the height of the ferromagnetic body 7 of the stator magnetic circuit 5.

The magnetic bearing 1 also comprises an annular jacket 13. The annular jacket 13 is welded to the annular support 8. The material of the annular jacket 13 is chosen among magnetic materials, preferably among ferromagnetic materials such as carbon and low alloy steels. In particular, as the jacket is coated by a protective layer to be protected against corrosion, it is no more necessary to use materials with high properties against corrosion: the material of the jacket 13 is chosen according to its magnetic properties and its mechanical properties. In this case, the annular jacket 13 does not increase the airgap between the stator magnetic circuit 5 and the rotor armature 3.

The magnetic bearing 1 also comprises a protective layer 17. The aim of the protective layer 17 is to protect the stator magnetic circuit 5 and the jacket against corrosion. The protective layer 17 is present on the surface of the jacket 13. The protective layer 17 may also cover the external surface of the flanges 11, 12 of the annular support 8.

In some embodiments, the thickness of the protective layer 17 may be in the range of 1nm to 1mm, preferably in the range of 100nm to 10µm.

In some embodiments, the protective layer 17 may be a layer of nickel. The layer of nickel may be formed by electroless-nickel plating. The layer of nickel may comprise nickel and phosphorus.

Thanks to the use of the annular jacket 13 and of the protective layer 17, it is possible to get a protection of the stator magnetic circuit 5 against corrosion, while keeping an airgap Δ between the stator magnetic circuit 5 and the rotor armature 3 smaller than in the magnetic bearing of the prior art. In particular, when the annular jacket 13 comprises ferromagnetic material, the airgap Δ is the sum of the distance between the protective layer 17 and the rotor armature 3, and of the thickness of the protective layer 17.

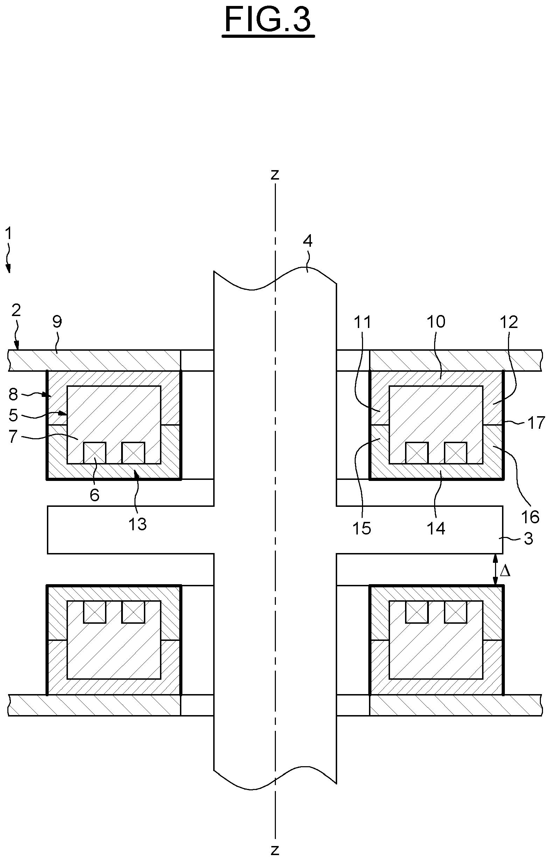

In the exemplary embodiment shown in Figure 3, an axial jacketed magnetic bearing 1 for a rotary machine comprises an annular jacket 13 having a U section with a radial web 14 and inner and outer axial flanges 15 and 16. The axial flanges 15, 16 of the annular jacket 13 are welded to the flanges 11, 12 of the annular support 8.

In particular, the jacket 13 may comprise two materials: one material for the radial web 14, and one material for the axial flanges 15, 16. The material of the axial flanges 15, 16 is chosen among the materials that can be easily welded and that are resistant against corrosion, for instance nickel-base alloy such as Inconel® 625. The material of the radial web 14 is chosen among the magnetic materials, preferentially among ferromagnetic materials.

In this exemplary embodiment, the material of the axial flanges of the annular jacket 13 has not to be protected against corrosion. In this case, the protective layer 17 may be applied to the surface of the annular jacket 13 before the welding step of the annular jacket 13 onto the annular support 8. Indeed, during the welding step, the protective layer 17 may be removed from the welded parts of the annular jacket, i.e. from the axial flanges 15, 16, but not from the radial web 14. It is then possible to perform a heat treatment (for instance at 600°C) of the protective layer 17, after the deposition onto the annular jacket 13, and before the welding step of the annular jacket 13 to the annular support 8. The heat treatment before the welding step allows to get a better coating of the protective layer 17 onto the annular jacket 13, while not damaging the coils 6 of the stator magnetic circuit 5. Moreover, the use of specific materials for the flanges 15, 16 of the annular jacket 13 allows to avoid corrosion of said flanges after the removal of the protective from the welding parts during the welding step.

The above description is made with reference to an axial type magnetic bearing. However, it can be applied in like manner to a magnetic bearing of radial type or to a magnetic bearing of conical type combining the functions of a radial bearing and of an axial bearing.

## Claims

1. A jacketed magnetic bearing (1) for a rotary machine having a rotor (4), the bearing (1) comprising a stator magnetic circuit (5) secured to a stationary support device (2), the stator magnetic circuit (5) comprising at least one coil (6) and a ferromagnetic body (7) placed in a metallic protective enclosure, wherein said protective enclosure comprises an annular support (8) and an annular jacket (13), the annular support (8) and the annular jacket (13) being welded together,
**characterized in that** the annular jacket (13) and the annular support comprise the same material chosen among carbon and low alloy steels and stainless steel and the annular jacket (13) comprises magnetic material and is coated by a protective layer (17).

2. A bearing (1) according to claim 1 wherein the protective layer (17) comprises a layer of nickel.

3. A bearing (1) according to claim 2 wherein said layer of nickel is formed by electroless-nickel plating.

4. A bearing (1) according to claim 2 or 3 wherein said layer of nickel comprises nickel and phosphorus.

5. A bearing (1) according to claim 1 to 4 wherein the annular jacket (13) comprises magnetic material chosen among the group of ferromagnetic material, magnetic stainless steel and nickel base alloy.

6. A bearing (1) according to claim 1 to 5 wherein the bearing (1) is a jacketed axial magnetic bearing.

7. A bearing (1) according to claim 6 comprising a rotor armature (3) in the form of a disk secured to the rotor (4), and wherein the stator magnetic circuit (5) is facing said rotor armature (3).

8. A bearing (1) according to claim 7 and 2 wherein the rotor (4) and the rotor armature (3) are, in use, in contact with a fluid, for instance a gaseous atmosphere, that is corrosive, acid, or carrying particles.

9. A bearing (1) according to any one of claims 1 to 8 wherein the annular jacket (13) is in contact with the coil (6) and/or the ferromagnetic body (7).

10. A bearing (1) according to any one of claims 1 to 9 wherein the protective enclosure comprises magnetic material and is coated by the protective layer (17).

11. Rotary machine comprising a bearing (1) according to any one of claims 1 to 10.

12. Process to manufacture a bearing (1) according to any one of claims 1 to 10, comprising the steps of: welding the annular jacket (13) to the annular support (8) and coating the annular jacket (13) with the protective layer (17), the annular support and the annular jacket comprising the same material chosen among carbon and low alloy steels and stainless steel.

13. Process according to claim 12 wherein the annular jacket (13) has a U section with a radial web (14) and two axial flanges (15, 16), the two flanges (15, 16) comprising a nickel base alloy, and comprising the following steps of: coating the annular jacket (13) with the protective layer (17), performing a heat treatment of the coated annular jacket and then welding the coated annular jacket to the annular support (8).

## Patentansprüche

1. Ummanteltes Magnetlager (1) für eine einen Rotor (4) aufweisende Drehmaschine, wobei das Lager (1) einen Statormagnetkreis (5) umfasst, der an einer stationären Tragvorrichtung (2) befestigt ist, wobei der Statormagnetkreis (5) wenigstens eine Spule (6) und einen ferromagnetischen Körper (7) umfasst, die in einer metallischen Schutzeinfassung platziert sind, wobei die Schutzeinfassung eine ringförmige Halterung (8) und eine ringförmige Ummantelung (13) umfasst, wobei die ringförmige Halterung (8) und die ringförmige Ummantelung (13) zusammengeschweißt sind,
**dadurch gekennzeichnet, dass** die ringförmige Ummantelung (13) und die ringförmige Halterung das gleiche Material umfassen, das aus unlegiertem und niedriglegiertem Stahl sowie Edelstahl ausgewählt ist, und die ringförmige Ummantelung (13) ein magnetisches Material umfasst und mit einer Schutzschicht (17) beschichtet ist.

2. Lager (1) nach Anspruch 1, wobei die Schutzschicht (17) eine Nickelschicht umfasst.

3. Lager (1) nach Anspruch 2, wobei die Nickelschicht durch eine stromlose Vernickelung gebildet ist.

4. Lager (1) nach Anspruch 2 oder 3, wobei die Nickelschicht Nickel und Phosphor umfasst.

5. Lager (1) nach Anspruch 1 bis 4, wobei die ringförmige Ummantelung (13) ein magnetisches Material umfasst, das aus der Gruppe ausgewählt ist, die aus ferromagnetischem Material, magnetischem Edelstahl und einer Nickelbasislegierung besteht.

6. Lager (1) nach Anspruch 1 bis 5, wobei es sich bei dem Lager (1) um ein ummanteltes axiales Magnetlager handelt.

7. Lager (1) nach Anspruch 6, umfassend einen Rotoranker (3) in Form einer an dem Rotor (4) befestigten Scheibe, wobei der Statormagnetkreis (5) dem Rotoranker (3) zugewandt ist.

8. Lager (1) nach Anspruch 7 und 2, wobei sich der Rotor (4) und der Rotoranker (3) im Gebrauch in Kontakt mit einem Fluid, zum Beispiel einer gashaltigen Atmosphäre, befinden, das korrosiv oder sauer ist oder Partikel enthält.

9. Lager (1) nach einem der Ansprüche 1 bis 8, wobei sich die ringförmige Ummantelung (13) in Kontakt mit der Spule (6) und/oder dem ferromagnetischen Körper (7) befindet.

10. Lager (1) nach einem der Ansprüche 1 bis 9, wobei die Schutzeinfassung ein magnetisches Material umfasst und mit der Schutzschicht (17) beschichtet ist.

11. Drehmaschine, umfassend ein Lager (1) nach einem der Ansprüche 1 bis 10.

12. Verfahren zur Herstellung eines Lagers (1) nach einem der Ansprüche 1 bis 10, umfassend folgende Schritte: Verschweißen der ringförmigen Ummantelung (13) mit der ringförmigen Halterung (8) und Beschichten der ringförmigen Ummantelung (13) mit der Schutzschicht (17), wobei die ringförmige Halterung und die ringförmige Ummantelung das gleiche Material umfassen, das aus unlegiertem und niedriglegiertem Stahl sowie Edelstahl ausgewählt ist.

13. Verfahren nach Anspruch 12, wobei die ringförmige Ummantelung (13) einen U-förmigen Abschnitt mit einem radialen Steg (14) und zwei axialen Flanschen (15, 16) aufweist, wobei die beiden Flansche (15, 16) eine Nickelbasislegierung umfassen und wobei das Verfahren folgende Schritte umfasst: Beschichten der ringförmigen Ummantelung (13) mit der Schutzschicht (17), Durchführen einer Wärmebehandlung der beschichteten ringförmigen Ummantelung und anschließendes Verschweißen der beschichteten ringförmigen Ummantelung mit der ringförmigen Halterung (8).

## Revendications

1. Palier magnétique à double enveloppe (1) pour une machine rotative comportant un rotor (4), le palier (1) comprenant un circuit magnétique de stator (5) fixé à un dispositif de support statique (2), le circuit magnétique de stator (5) comprenant au moins une bobine (6) et un corps ferromagnétique (7) placé dans une enceinte de protection métallique, dans lequel ladite enceinte de protection comprend un support annulaire (8) et une enveloppe annulaire (13), le support annulaire (8) et l'enveloppe annulaire (13) étant soudés l'un à l'autre,
**caractérisé en ce que** l'enveloppe annulaire (13) et le support annulaire comprennent le même matériau choisi parmi l'acier au carbone et les aciers faiblement alliés et l'acier inoxydable et l'enveloppe annulaire (13) comprend un matériau magnétique et est revêtue d'une couche de protection (17).

2. Palier (1) selon la revendication 1, dans lequel la couche de protection (17) comprend une couche de nickel.

3. Palier (1) selon la revendication 2, dans lequel ladite couche de nickel est formée par nickelage chimique.

4. Palier (1) selon la revendication 2 ou 3, dans lequel ladite couche de nickel comprend du nickel et du phosphore.

5. Palier (1) selon les revendications 1 à 4, dans lequel l'enveloppe annulaire (13) comprend un matériau magnétique choisi dans l'ensemble comprenant un matériau ferromagnétique, de l'acier inoxydable magnétique et un alliage à base de nickel.

6. Palier (1) selon les revendications 1 à 5, dans lequel le palier (1) est un palier magnétique axial à double enveloppe.

7. Palier (1) selon la revendication 6, comprenant une armature de rotor (3) sous la forme d'un disque fixé au rotor (4), et dans lequel le circuit magnétique de stator (5) se trouve en face de ladite armature de rotor (3).

8. Palier (1) selon les revendications 7 et 2, dans lequel le rotor (4) et l'armature de rotor (3), en utilisation, sont en contact avec un fluide, par exemple une atmosphère gazeuse, qui est corrosive, acide ou qui transporte des particules.

9. Palier (1) selon l'une quelconque des revendications 1 à 8, dans lequel l'enveloppe annulaire (13) est en contact avec la bobine (6) et/ou le corps ferromagnétique (7).

10. Palier (1) selon l'une quelconque des revendications 1 à 9, dans lequel l'enceinte de protection comprend un matériau magnétique et est revêtue de la couche de protection (17).

11. Machine rotative comprenant un palier (1) selon l'une quelconque des revendications 1 à 10.

12. Procédé de fabrication d'un palier selon l'une quelconque des revendications 1 à 10, comprenant les étapes suivantes : souder l'enveloppe annulaire (13) sur le support annulaire (8) et recouvrir l'enveloppe annulaire (13) de la couche de protection (17), le support annulaire et l'enveloppe annulaire comprenant le même matériau choisi parmi l'acier au carbone et les aciers faiblement alliés et l'acier inoxydable.

13. Procédé selon la revendication 12, dans lequel l'enveloppe annulaire (13) a une section en U avec une âme radiale (14) et deux brides axiales (15, 16), les deux brides (15, 16) comprenant un alliage à base de nickel, et comprenant les étapes suivantes : recouvrir l'enveloppe annulaire (13) de la couche de protection (17), exécuter un traitement thermique de l'enveloppe annulaire revêtue puis souder l'enveloppe annulaire revêtue sur le support annulaire (8).
